# EUROPEAN PATENT APPLICATION

(11) **EP 2 433 503 A1**
(43) Date of publication of application: **28.03.2012**
(21) Application number: 10777722.9
(22) Date of filing: 17.05.2010
(51) Int. Cl.: A23L 1/03, A23L 1/01, A23L 1/10, A23L 1/40

(54) **METHOD FOR PRODUCING PROCESSED FOOD FOR HEATING**

(30) Priority: 18.05.2009 JP 2009119790
(71) Applicant: Kaneka Corporation, Osaka-shi, Osaka 530-8288 (JP)
(72) Inventor: ARAI, Naoki, Takasago-shi Hyogo 676-8688 (JP); ABE, Masayuki, Takasago-shi Hyogo 676-8688 (JP); TOMONO, Jun, Takasago-shi Hyogo 676-8688 (JP); YOKOTA, Shinichi, Takasago-shi Hyogo 676-8688 (JP); KEGASA, Hideaki, Takasago-shi, Hyogo 6768688 (JP)
(74) Representative: HOFFMANN EITLE
(86) International application number: PCT/JP2010/058289
(87) International publication number: WO 2010/134489

(57) **Abstract**

An objective to be achieved by the present invention is to provide a method for producing a heat processed food which can be uniformly heated in a short time without causing "unevenness of heating" on microwave oven cooking. Another objective of the present invention is also to provide a heat processed food, use of an antifreeze protein in producing a heat processed food, a method for improving an effect of heating treatment on a heat processed food, and an agent for improving an effect of heating treatment. The method for producing a heat processed food according to the present invention is **characterized in** comprising the steps of adding an antifreeze protein to a food material or a food; and cooling the resulting mixture.

## Description

### TECHNICAL FIELD

The present invention relates to a heat processed food, a method for producing a heat processed food, use of an antifreeze protein for producing a heat processed food, a method for improving a heating treatment effect on a heat processed food, and an agent for improving a heating treatment effect.

### BACKGROUND ART

In the field of a recent heat processed food such as a microwave food and a chilled food, product development for microwave cooking is becoming popular. In a general heat-cooking method before a microwave oven came to be used as a heat-cooking utensil, a food was taken out of a package, and then the food was cooked in a pot over fire, fried in oil, or baked in an oven or a toaster.

Since a heat processed food developed in recent years is packed in a container suitable for microwave oven cooking, the food can be heated in a microwave oven without being gotten out of the container to be easily eaten. However, a food, such as boiled rice, sauce, soup, curried rice and gratin, usually have a high water content. Therefore, when a frozen processed food of the above-described food is heated in a microwave oven, a microwave may focus on some parts of the food and the food may be ununiformly heated. As a result, "unevenness of heating", that is, the food is partially hot and partially cold, is easily caused. As a result, though the temperature of. When the cold part is heated to a proper temperature to be eaten, there is a problem that a longer time for cooking is required. In addition, the hot part becomes overheated, and water is boiled away due to the excessive partial temperature increase, leading to the deterioration of quality, such as color change, dryness and hardening.

As a method to solve such problems in defrosting a frozen processed food, for example, Patent Document 1 discloses a method of injecting air into a soup or a sauce in a frozen food to form numerous air bubbles. The bobbles are equally affected by microwave at the time of defrosting; therefore, the time taken to defrost the frozen food can be shortened. Patent Document 2 discloses a method of melting a frozen food by external heating in advance, followed by radiating an electromagnetic wave to uniformly defrost the food in a short time. However, the above-described methods are atypical; therefore, an easier new method for producing a heat processed food which is cookable in a short time is desired.

### PRIOR ART DOCUMENT

### PATENT DOCUMENTS

Patent Document 1: JP10-127260A
Patent Document 2: JP2001-292754A

### SUMMARY OF THE INVENTION

### PROBLEMS TO BE SOLVED BY THE INVENTION

An objective to be achieved by the present invention is to provide a method for producing a heat processed food which can be uniformly heated in a short time without causing "unevenness of heating" on microwave oven cooking. Another objective of the present invention is also to provide a heat processed food, use of an antifreeze protein in producing a heat processed food, a method for improving an effect of heating treatment on a heat processed food, and an agent for improving an effect of heating treatment.

### SOLUTIONS TO THE PROBLEMS

The present inventors made intensive investigations to solve the above-mentioned problems. As a result, the present inventors found that a heat processed food can be defrosted in a significantly shortened time and heated with little "unevenness of heating" when heated in a microwave oven by adding an antifreeze protein.
A method for producing a heat processed food of the present invention comprises the steps of adding an antifreeze protein to a food material or a food; and cooling the resulting mixture.
An antifreeze protein of the present invention is used for producing a heat processed food.
A heat processed food of the present invention comprises an antifreeze protein.
A method for improving an effect of heating treatment on a heat processed food according to the present invention comprises the step of adding an antifreeze protein to a food material or a food.
An agent for improving an effect of heating treatment on a heat processed food of the present invention comprises an antifreeze protein.

### MODES FOR CARRYING OUT THE INVENTION

One embodiment of the present invention is described below.

The present invention is based on the findings of the present inventors that the above-mentioned problem can be effectively solved by adding an antifreeze protein (AFP) to a heat processed food. The present invention relates to a heat processed food characterized in containing an antifreeze protein. Hereinafter, a heat processed food is simply referred to as "a processed food".
More specifically, the inventors found that an effect of heating treatment is improved by adding an antifreeze protein to a processed food. In particular, a heating time for defrosting is shortened and unevenness of heating is inhibited by an antifreeze protein. Such an effect is believed to be exerted by the mechanism that the size of ice crystals which are formed when a processed food is frozen becomes smaller by the antifreeze protein, and thus, heat is uniformly and quickly transmitted to the processed food.

An antifreeze protein of the present invention inhibits growth of an ice crystal by, for example, acting on a surface of a fine ice crystal to change the configuration thereof at the early stage of freezing of water or an aqueous solution. Various antifreeze proteins exist in body fluid of fish which live in the cold sea of the Arctic Ocean, the Antarctic Ocean and the like, a plant, a fungi and others. An antifreeze protein is classified into an antifreeze glycoprotein, to which a sugar is bound, and an antifreeze nonglycoprotein, to which a sugar is not bound. At present, several different antifreeze proteins are found in various organisms.

A fish antifreeze protein is classified into four types (I to IV) according to the structures thereof and the like. For example, type I antifreeze protein has an alanine-rich α helix polypeptide and is known to exist in various flatfish and muddler. Type II antifreeze protein is rich in half-cystine, and is known to exist in sea raven, rainbow smelt and herring. Type III antifreeze protein is a globular protein, and is known to exist in some kinds of the family Zoarcidae including eelpouts and Bering wolffish. In recent years, type IV antifreeze protein is found in muddler. An antifreeze glycoprotein is found in three families including the Antarctic fish, the Antarctic cod and the Arctic cod, and mainly consist of tripeptide repeat (Ala-Ala-Thr) and contains disaccharide bound to a threonyl residue. Even when the antifreeze proteins are classified into the same type, the amino acid sequences and higher order structures of the proteins are not same. All of the antifreeze proteins, however, have an ability to inhibit growth of ice crystal particle by binding to the surface of ice.

An antifreeze protein derived from a plant is not particularly restricted, and an antifreeze protein derived from a food plant can be preferably used. Such an antifreeze protein is included in, for example, a vegetable and the like belonging to Brassicaceae family, Apiaceae family, Liliaceae family and Asteraceae family. A plant belonging to Brassicaceae family is exemplified by Chinese cabbage, Japanese radish, broccoli, bok choy, komatsuna, turnip, shirona, nozawana, hiroshimana, potherb mustard, mustard and the like, and is particularly Japanese radish and mustard. A plant belonging to Apiaceae family is exemplified by carrot. A plant belonging to Liliaceae family is exemplified by Welsh onion. A plant belonging to the family Asteraceae comprises crown daisy. Also, the allied species and improved species thereof can be appropriately used.
The above-described antifreeze protein derived from a plant can be extracted from the whole of or a part of the above-described plants by known means. A part of plant is exemplified by leaf, petiole, flower, fruit, branch and root, shoot, and seed. An antifreeze protein may be extracted by using water or an organic solvent from ground product of the whole of a plant or a part of a plant. The temperature for extraction may be not less than 3°C, more preferably not less than 10°C, even more preferably not less than 20°C, particularly preferably not less than 30°C, most preferably not less than 40°C, and may be not more than 200°C, more preferably not more than 180°C, even more preferably not more than 160°C, particularly preferably not more than 140°C, most preferably not more than 120°C. An antifreeze protein solution as the target compound may be preferably obtained by mixing a ground plant with approximately 10 times by volume of water, stirring the mixture not less than room temperature and not more than 105°C for not less than 10 minutes and not more than 2 hours, and filtering the obtained extract at not less than 1,000 × g and not more than 10,000 × g using a ultrafiltration centrifugal concentration device (molecular weight cut-off: 10,000).

An antifreeze protein derived from a fungi is not particularly restricted, and an antifreeze protein derived from edible fungi can be preferably used. For example, such an antifreeze protein may be derived from fungi such as shimeji, enoki, oyster mushroom and common mushroom. The allied species and improved species of the fungus can be also appropriately used. An antifreeze protein derived from fungi may be extracted by a known method from the whole of or a part of the above-mentioned fungi. Alternatively, the above-mentioned fungi is grown under a suitable culture condition for the fungi, an antifreeze protein is inductively produced under a low temperature condition, and then, the culture solution may be recovered. A low temperature condition to induce antifreeze protein is not particularly restricted, and may be not less than 0°C, more preferably not less than 2°C, and even more preferably not less than 4°C. In addition, a low temperature may be not more than 20°C, more preferably not more than 15°C, and even more preferably not more than 10°C. A broth including an antifreeze protein as the target compound may be preferably obtained by cultivating a fungi in a liquid culture medium for propagation at not less than 15°C and not more than 25°C for not less than 3 days and not more than 14 days, and then cultivating the proliferated fungi in a liquid culture medium at an induction temperature of not less than 0°C and not more than 10°C for not less than 3 days and not more than 14 days.

As an antifreeze protein of the present invention, an antifreeze protein of an insect, a bacterium and the like can also be used. For example, with respect to an antifreeze protein derived from an insect, it is known that a larva of Tenebrio molitor has an antifreeze protein with a parallel β helix structure consisting of a repeat sequence containing Thr-Xaa-Thr (wherein "Xaa" represents any amino acid residue) and Cys. With respect to an antifreeze protein derived from a bacterium, for example, an antifreeze protein secreted by Pseudomonas putida GR12-2 is found and is known to be a novel lipoglycoprotein.

The above-mentioned antifreeze protein can be extracted, for example, from an organism serum or a body fluid by conventionally known means. A protein can be isolated and purified by an isolation process such as centrifugation and a wide variety of chromatographic means, as well as adsorption, crystallization, concentration and the like. A protein can be isolated and purified by other means known by reference documents and the like. An antifreeze protein can be produced by a conventional chemical synthesis method or a method using a recombinant DNA. Among genes coding for the proteins, some of the nucleotide sequences thereof are determined and reported. For example, the genes consisting of the nucleotide sequences shown in DeVries, A. L. et al., J. Biol. Chem. 246: 305 (1971); Lin, Y. et al., Biochem. Biophys. Res. Commun. 46: 87 (1972); Yang, D. S. C. et al., Nature, 333: 232 (1988); Lin, Y., Proc. Natl. Acad. Sci. U.S.A 78: 2825 (1981); Davies, P. L. et al., J. Biol. Chem. 79: 335 (1982); Gourlie, B. et al., J. Biol. Chem. , 259: 14960 (1984); and Scott, G. K. et al., Can. J. Fish. Aquat. Sci. 43: 1028 (1986); and Scott, G. K. et al., J. Mal. Evol. 27: 29 (1988) can be used. Also, a method in which an AFP gene is microinjected into an other organism is reported. With respect to such a method, for example, Zhu, Z et al., Angew. Ichthyol., 1: 31 (1985); Kexue Tongbao, 31: 988 (1986); Chourrout, D. et al., Aquaculture, 51: 143 (1986); Dumman, R. A. et al., Trans. AM. Fish. Soc., 116: 87 (1987); Fletcher, G. L. et at.. Can. J. Fish Aquat. Sci. 45: 352 (1988); Maclean, N. D. et al., Bio Technology, 5: 257 (1987); Stuart, G. W. et al., Development, 103: 403 (1988); McEvoy, T. et al., Aquaculture, 68: 27 (1988); Ozato, K. et al., Cell Differ., 19: 237 (1986) and the like can be offered for reference. The reference documents are herein incorporated by reference.

An antifreeze protein used for a processed food according to the present invention may be an extract containing the above-mentioned antifreeze protein, or an antifreeze protein which is isolated and purified may be used. An antifreeze protein may be used alone, and alternatively, the mixture thereof may be used. In particular, an antifreeze protein which is derived from a plant and which is heat-resistant, and an antifreeze protein which is derived from a fungi and which has a high ability to inhibit growth of an ice crystal particle can be preferably used.

An additional treatment such as concentration, filtration and lyophilization can be performed on an antifreeze protein of a plant and a fungi, if needed. The combination of the antifreeze proteins obtained separately from two or more different plants and fungus can be also used.

A processed food of the present invention means a processed food which is heated prior to being eaten. Such a processed food is exemplified by a frozen food, a microwave food, a chilled food and a retort pouch food.

In the present invention, a frozen food means a food which is distributed, stored and marketed in a frozen state for the purpose of long storage. Such a frozen food is exemplified by a food which is frozen in a cooked state and a food which is freeze-preserved in advance as a cooking material. A frozen food in a cooked state may be fried in oil or heated in hot water or in a microwave oven prior to being eaten. A frozen food of a cooking material may be cooked after being defrosted or directly in a frozen state.
A food, a drink and a food material which are intended to be frozen are not particularly restricted, and a wide variety of food and the like may be used. A food and the like may be any of a drink, a half-cooked processed food, a cooked processed food, a fresh food, a fruit, a dessert and the like.

In the present invention, a microwave food means a half-cooked food or a cooked food which is heated with a packaging container in a microwave oven or the like to be eaten. Such a microwave food is exemplified by a microwave rice, a microwave pasta, a microwave pilaf, a microwave curry and rice, a microwave fried rice, a microwave red rice (sekihan), a microwave doria, a microwave risotto, a microwave congee, a microwave pan-fried noodle, a microwave beef-over-rice-bowl, a microwave rice soup (zosui), a microwave Chinese bowl, a microwave kettle rice (kamameshi), a microwave soba and a microwave wheat noodle.

In the present invention, a chilled food means a processed food which is transported and marketed in a cooled state in a temperature range as low as possible but not to freeze the food, for example, at temperature of not less than -5°C and not more than 5°C, and is also stored in a refrigerator at home. Such a chilled food is exemplified by a chilled hamburg steak, a chilled meatball, a chilled soup, a chilled ramen, a chilled wheat noodle, a chilled pasta, a chilled pudding, a chilled yoghurt, a chilled package of various drinks, a chilled cheese, a chilled cake and a chilled jelly.

In the present invention, a retort pouch food means a food which is sealed in an air tight container such as a retort pouch and sterilized with pressure and heat. Such a retort pouch food is exemplified by a retort curry, retort stew, retort rice, a retort congee, a variety of retort cooking sauces and a retort ingredient of various meals served in bowls.

The processed food of the present invention preferably contains not less than 0.00001% by mass and not more than 10% by mass of the above-mentioned antifreeze protein relative to the whole processed food. When the ratio is not less than 0.00001% by mass, the effect of the present invention is more definitely achieved. When the ratio is not more than 10% by mass, the effect of the present invention is achieved to the extent that the eating-quality and texture of a processed food is not impaired. The ratio is more preferably not less than 0.0001% by mass, even more preferably not less than 0.001% by mass, more preferably not more than 1.0% by mass, and even more preferably not more than 0.1% by mass.

To the processed food of the present invention, an ingredient to prevent softening of food or for other purpose may be added in addition to an antifreeze protein. Such an ingredient is exemplified by a salt such as calcium hydroxide, calcium lactate, calcium chloride, calcium citrate, calcium sulfate, calcium dihydrogenphosphate, calcined calcium, magnesium chloride, magnesium carbonate and magnesium sulfate; a thickening agent such as carrageenan, locust bean gum, gellan gum, sodium alginate, gelatin, pectin, guar gum, xanthan gum, tragum, tamarind gum and agar; an organic acid, an organic acid derivative and an organic acid salt such as adipic acid, citric acid, glucono-δ-lactone, gluconic acid, acetic acid, tartaric acid, lactic acid, fumaric acid, malic acid, trisodium citrate, sodium gluconate, sodium acetate, sodium tartrate, sodium lactate, monosodium fumarate and sodium malate; and a saccharide such as glucose, fructose, sucrose, trehalose, xylose, sorbitol, starch syrup, oligosaccharide, dextrin, erythritol, maltitol and xylitol.

The processed food of the present invention can be produced by a method comprising the steps of adding an antifreeze protein to a food material or a food, and cooling the obtained mixture.

The above-mentioned antifreeze protein can be added to a food material prior to being cooked, can be added during cooking of a food material, and can also be added after cooking. It is preferred that the additive amount of an antifreeze protein be adjusted in view of the ratio of the antifreeze protein to a processed food obtained in the end. After the addition, it is preferred that an antifreeze protein and a food material or a food be mixed adequately.
It is preferred that the above-mentioned antifreeze protein is added to a food material or a food, and then the resulting mixture is transferred to a pouch or a cup container to be sealed. Sealing can be carried out in a conventional manner. As a pouch container, for example, a retort pouch can be used.
In the case of a microwave food and a retort pouch food, it is preferred that heat sterilization of the above-mentioned mixture be carried out at a high temperature of 120°C or more for a given period of time to kill a variety of microorganism existing in the mixture. In the case of a chilled food, it is preferred that heat sterilization be carried out at a temperature of less than 120°C. The heat sterilization after a food material is sealed in a container can be carried out by a conventional method, for example, by using a normal retort cooker.
Next, the mixture containing an antifreeze protein and a food material or a food is cooled. It is preferred that the cooling be carried out until the temperature of the mixture becomes approximately 10°C or less. The cooling can be performed, for example, by supplying cooled water (chiller water) to a container. The time required for the step of cooling is not particularly restricted, but the cooling is preferably performed at the above-mentioned temperature, for example, within 2 days in terms of inhibiting germination and proliferation of spore-forming microorganism. The cooling can be performed simultaneously with transportation in a refrigerator.

In the case of a frozen food, an antifreeze protein-added food material, and further a food cooked using the food material are cooled to be frozen.
By the antifreeze protein, the time to freeze and defrost the food or food material can be shortened. The effect is confirmed in a variety of methods for freezing and defrosting.
As a freezing process, any process, such as a process of freezing in a refrigerator, a process of spraying subzero cold air, and a process of soaking in a cooling medium, can be used. In addition, as a defrosting process, any process, such as defrosting in an oven, defrosting in a microwave oven, and self-thawing at room temperature can be used.

The antifreeze protein of the present invention can be used in a composition for preparing a processed food and an agent for improving a heating treatment effect. The composition and the agent for improving a heating treatment effect used for the present invention can be prepared by appropriately adding a food additive and seasoning to an antifreeze protein. Such a composition and an agent for improving a heating treatment effect are exemplified by a curry roux for preparing a frozen curry, a stew roux for preparing a frozen stew, and a composition for preparing frozen rice, but are not restricted thereto. A composition for preparing a processed food is included in the range of the present invention as long as it is confirmed that the heating time of a heat processed food prepared by using the composition is shortened.

According to the present invention, when a processed food is cooked in a microwave oven or the like, a heating treatment effect can be improved. More specifically, according to the present invention, a processed food which can be cooked in a shortened heating time and uniformly heated without causing "unevenness of heating" is provided.

### EXAMPLES

Hereinafter, the embodiment of the present invention is described in more detail with Examples. The present invention is not limited to the following Examples in any way, and some of the details can be variously changed. In addition, the present invention is not limited to the above-described embodiments, and various changes may be made within the scope of the claims. An embodiment obtained by a proper combination of technical means separately disclosed is also included in the technical scope of the present invention. All patent documents and non-patent documents described in the specification are herein incorporated by reference. In the Examples and Comparative Examples, the units "part(s)" and "%" are based on weight unless otherwise specified.

### Example 1

### (1) Production of an antifreeze protein solution

To 2.5 L of distilled water, 700 g of commercially available Brassica juncea (trade name: mustard sprout, produced by Murakami Farm Co, ltd.) was added, and extraction was carried out using hot water at 105°C for 1 hour. The mixture was filtered using a filter paper (manufactured by ADVANTEC, retention particle size: 5 µm), and about 2 L of the obtained extract was then concentrated under increased pressure using an ultrafiltration concentrator device (manufactured by ADVANTEC, UHP-150) to obtain 200 ml of a concentrated solution. The concentrated solution was centrifuged at 10,000 × g for 10 minutes to obtain a supernatant. The protein concentration in the supernatant was measured by BCA method using BCA kit manufactured by Pierce, and the result was 5 mg/ml. Thus, the concentration of the antifreeze protein solution is 0.5%.

### (2) Production of frozen rice

To 0.72 L of no-wash rice (product name: "Akitakflmachi" produced in Akita Prefecture), 750 mL of tap water mixed with 1.5 mg (on the protein mass basis) of the extract obtained in Example 1(1) was added. The mixture was left to stand for 1 hour and the rice was then cooked. The rice was cooked using IH jar rice cooker (manufactured by ZOJIRUSHI CORPORATION, NP-HD10-XA). After completion of rice cooking, the cooked rice was divided into portions of 100 g each in containers of 8 cm × 5.6 cm × 3.2 cm in depth. The divided rice was then stored in a refrigerator freezer at -20°C.

### Comparative Example 1

Rice cooking and frozen storage were performed in the same manner as in Example 1(2) except that tap water not containing the extract obtained in Example 1(1) was used.

### Test Example 1

After 4 weeks of storage, the frozen rices produced in Example 1(2) and Comparative Example 1 were defrosted in a microwave oven (manufactured by Sharp, Fussy S-INVERTER 700, output power: 500 W) for 2 minutes, and the temperatures of the defrosted rices were measured. Specifically, a stainless steel dewar flask (trade name: thermocut D-1000, manufactured by Thermos K.K.) was put in a test room maintained at a constant temperature (24°C), and a temperature sensor (trade name: Thermo Recorder Ondotori TR-71U, manufactured by T&D Corporation) was fixed on the inner wall part thereof. Into the dewar flask, 400 ml of deionized water maintained at 30°C using hot water bath was poured. The inside of the flask was stirred using a mixer (laboratory high power mixer, manufactured by Iuchiseieido) at a constant rate of 400 rpm, and at the same time, measurement of the temperature was started. At 30 seconds after the start of temperature measurement, rice immediately after defrosting in a microwave oven was thrown into the dewar flask, and the temperature of the inside of the flask was measured for another 5 minutes. The results of the temperature change in the inside of the flask are shown in Table 1.

**Table 1**

| | Example 1(2) | Comparative Example 1 |
|---|---|---|
| Temperature change(°C) | 8.5 | 7.1 |

As shown in Table 1, with respect to the antifreeze protein-containing rice produced in Example 1(2), the temperature change of the inside of the flask was larger by 1.4°C as compared with the temperature of the rice of Comparative Example 1 not containing an antifreeze protein. The fact that temperature change of the inside of the flask was large means that the temperature of rice after heating in a microwave oven was high. Thus, the above result meant that the time needed to heat in a microwave oven was shortened. It was confirmed by the result that the heating time of frozen rice in a microwave oven was shortened by adding an antifreeze protein.

### Example 2

To 0. 72 L of no-wash rice (product name: "Akitakomachi" produced in Akita Prefecture), each 750 mL of tap water containing 15 mg and 150 mg (on the protein mass basis) of an antifreeze protein obtained from a commercially available radish sprout (produced by BICC World Co. Ltd.) was respectively added, and the rice was cooked in the same manner as in Example 1(2). After completion of rice cooking, rice was divided into portions of 100 g each in containers, and then stored in a refrigerator freezer at -20°C.

### Comparative Example 2

Rice cooking and frozen storage were performed in the same manner as in Example 2 except that tap water not containing the radish sprout antifreeze protein was used.

### Test Example 2

After 4 weeks of storage, the frozen rices produced separately in Example 2 and Comparative Example 2 were defrosted in a microwave oven for 2 minutes, and the temperatures of the rices were compared in the same manner as in Test Example 1. The results are shown in Table 2.

**Table 2**

| Additive amount of the radish sprout antifreeze protein (mg) | 0 (control) | 15 | 150 |
|---|---|---|---|
| Temperature change (°C) | 7.4 | 7.9 | 8.2 |

As shown in Table 2, with respect to the rices containing radish sprout antifreeze protein, temperature change of the inside of the flask was larger as compared with the temperature of the rice obtained in Comparative Example 2, which did not contain an antifreeze protein (control). The temperature change in the case where the amount of the antifreeze protein was 15 mg was larger by 0.5°C, and the temperature change in the case where the amount was 150 mg was larger by 0.8°C. It was confirmed that the time to heat frozen rice in a microwave oven was shortened by adding an antifreeze protein.

### Example 3

To 380 g of commercially available retort curry roux, 20 g of tap water mixed with 12 mg (on the protein mass basis) of an antifreeze protein obtained from a commercially available radish sprout was added, and the mixture was stirred to be homogenously mixed in an 80°C hot water bath. After preparation, curry roux was divided into portions of 100 g each in containers, and then stored in a refrigerator freezer at -20°C.

### Comparative Example 3

The preparation and frozen storage of curry roux were performed in the same manner as in Example 3 except that tap water not containing the radish sprout antifreeze protein was used.

### Test Example 3

After 4 weeks of storage, the frozen curry rouxs produced separately in Example 3 and Comparative Example 3 were defrosted in a microwave oven for 2 minutes and 30 seconds, and the temperatures of the curry rouxs immediately after defrosting were measured. Into 200 ml of deionized water maintained in a 30°C hot water bath, the curry roux immediately after defrosting by using a microwave oven was poured in the same manner as in Test Example 1, and the temperature changes were measured. The results are shown in Table 3.

**Table 3**

| | Example 3 | Comparative Example 3 |
|---|---|---|
| Temperature change(°C) | 8.1 | 7.8 |

As shown in Table 3, with respect to the curry roux which was produced in Example 3 and contained the antifreeze protein obtained from a radish sprout, the temperature change of the inside of the flask was higher by 0.3°C than the temperature of curry roux of Comparative Example 3 not containing the antifreeze protein (control). It was confirmed that the time to heat the frozen curry roux in a microwave oven was shortened by adding an antifreeze protein.

## Claims

1. A method for producing a heat processed food, comprising the steps of adding an antifreeze protein to a food material or a food; and cooling the resulting mixture.

2. The production method according to claim 1, wherein the content of the antifreeze protein in the heat processed food is not less than 0.00001% by mass.

3. The production method according to claim 1 or 2, wherein the antifreeze protein is derived from a plant.

4. The production method according to claim 1 or 2, wherein the antifreeze protein is derived from a fungi.

5. Use of an antifreeze protein for producing a heat processed food.

6. A heat processed food, comprising an antifreeze protein.

7. The heat processed food according to claim 6, the content of the antifreeze protein in the heat processed food is not less than 0.00001% by mass.

8. The heat processed food according to claim 6 or 7, wherein the antifreeze protein is derived from a plant.

9. The heat processed food according to claim 6 or 7, wherein the antifreeze protein is derived from a fungi.

10. The heat processed food according to any one of claims 6 to 8, wherein the heat processed food is a frozen food, a microwave food, a chilled food or a retort pouch food.

11. A method for improving a heating treatment effect on a heat processed food, comprising the step of adding an antifreeze protein to a food material or a food.

12. The method for improving a heating treatment effect according to claim 11, wherein the heating treatment effect is to shorten a heating time.

13. The method for improving a heating treatment effect according to claim 11, wherein the heating treatment effect is to inhibit the unevenness of heating.

14. An agent for improving a heating treatment effect on a heat processed food, comprising an antifreeze protein.

15. The agent for improving a heating treatment effect according to claim 14, wherein the antifreeze protein is derived from a plant.

16. The agent for improving a heating treatment effect according to claim 14, wherein the antifreeze protein is derived from a fungi.
